# EUROPÄISCHE PATENTANMELDUNG

(11) **EP 1 201 473 A2**
(43) Veröffentlichungstag der Anmeldung: **02.05.2002**
(21) Anmeldenummer: 01123508.2
(22) Anmeldetag: 29.09.2001
(51) Int. Cl.: B60J 1/20

(54) **Fensterrollo**

(30) Priorität: 24.10.2000 DE 10052560; 13.01.2001 DE 10101436
(71) Anmelder: HAPPICH Fahrzeug- und Industrieteile GmbH, 42285 Wuppertal (DE)
(72) Erfinder: Churchfield, Vincent, 42477 Radevormwald (DE)

(57) **Zusammenfassung**

Beschrieben wird ein Fensterrollo mit einer eine Aufwickeleinrichtung aufweisenden Wickelwelle (1), einer auf der Wickelwelle (1) aufgewickelten Rollobahn (2), einem Zugstab (3), an dem das freie Ende der Rollobahn (2) befestigt ist, einer Führungseinrichtung, an der die Endbereiche des Zugstabs (2) senkrecht zur Zugstabsachse längsverschiebbar angeordnet sind und einer innerhalb des Zugstabs (3) angeordneten Bremseinrichtung, die lösbar an der Führungseinrichtung angreift, um den Zugstab (3) in beliebigen Positionen an der Führungseinrichtung festzulegen.

## Beschreibung

Die Erfindung bezieht sich auf ein Fensterrollo mit einer eine Aufwickelvorrichtung aufweisenden Wickelwelle, einer auf der Wickelwelle aufgewickelten Rollobahn und einem Zugstab, an dem das freie Ende der Rollobahn befestigt ist.

Fensterrollos der genannten Art, die als Sonnenschutz, insbesondere auch in Fahrzeugen dienen, sind im allgemeinen als Springrollos und entsprechend aufwendig ausgebildet. Noch aufwendiger sind elektromotorisch betriebene Fensterrollos, die auch zum Stand der Technik gehören.

Der Erfindung liegt die Aufgabe zugrunde ein Fensterrollo zur Verfügung zu stellen, dessen Rollobahn in einfacher Weise von der Wickelwelle abgezogen und in eine jeweils gewünschte Sonnenschutzposition überführt und arretiert werden kann, wobei insbesondere eine kostengünstige Ausbildung angestrebt wird.

Gegenstand der Erfindung ist demgemäss ein Fensterrollo mit einer eine Aufwickelvorrichtung aufweisenden Wickelwelle, einer auf der Wickelwelle aufgewickelten Rollobahn, einem Zugstab, an dem das freie Ende der Rollobahn befestigt ist, einer Führungsvorrichtung, an der die Endbereiche des Zugstabs senkrecht zur Zugstabachse längsverschiebbar angeordnet sind und einer innerhalb des Zugstabs angeordneten Bremseinrichtung, die lösbar an der Führungseinrichtung angreift, um den Zugstab in beliebigen Positionen an der Führungseinrichtung festzulegen. Die Führungsvorrichtung besteht dabei bevorzugterweise aus zwei die Rollobahn an ihren Längsrändern flankierende Hohlprofilleisten, die an ihren einander zugewandten Seiten jeweils mit einem Längsschlitz versehen sind. Anstelle von Hohlprofilleisten können aber auch Stäbe, z. B. aus Rundmaterial eingesetzt werden. Von besonderer Bedeutung ist, dass in die freien Enden des Zugstabs Verschlusskörper eingesetzt sind, die jeweils in einen der Längsschlitze eingreifen und jeweils eine Öffnung mit einem darin eingesetzten, durch eine Druckfeder belasteten Bremsklotz aufweisen, wobei die Anordnung der Bremsklötze so getroffen ist, dass sie über ein verstellbares Verbindungsorgan gegen die Kraft der Druckfeder unter Aufhebung der Bremswirkung gegeneinanderbewegbar sind. Im Regelfall befinden sich die Bremsklötze in Anpressanlage an der Innenwandung der Hohlprofilleisten und diese Anpressanlage wird nur zum Verstellen der Rollobahnposition vorübergehend aufgehoben.

Mit besonderem Vorteil kann vorgesehen sein, dass das verstellbare Verbindungsorgan aus einem an den Bremsklötzen befestigten, straff geführten Drahtseil besteht, das durch im Abstand voneinander angeordnete Widerlager abgestützt ist, wobei zwischen den Widerlagern ein am Drahtseil angreifendes Stellorgan angeordnet ist, um bei dessen Betätigung die wirksame Länge des Drahtseils zu kürzen und die Bremsklötze gegeneinander zuziehen. Dabei besteht das Stellorgan bevorzugt aus einem am Zugstab angelenkten und mit einer als Exzenterbahn ausgebildeten Angriffsfläche am Drahtseil abgestützten, von Hand betätigbaren Hebel.

In Ausgestaltung der Erfindung kann ferner vorgesehen sein, dass der Zugstab einen Griff mit einer Grifföffnung aufweist, in welcher der als Stellorgan dienende Hebel angeordnet ist.

Gegenstand der Erfindung ist auch ein Fensterrollo mit einer eine Aufwickeleinrichtung aufweisenden Wickelwelle, einer auf der Wickelwelle aufgewickelten Rollobahn, einem Zugstab, an dem das freie Ende der Rollobahn befestigt ist, einer Führungseinrichtung, an der die Endbereiche des Zugstabs senkrecht zur Zugstabsachse längsverschiebbar angeordnet sind, wobei die Führungseinrichtung zwei die Rollobahn an ihren Längsrändern flankierende Zahnstangen und zwei damit kämmende Zahnräder, die an den Endbereichen des Zugstabs angeordnet sind, umfasst und zumindest einer Bremseinrichtung, um den Zugstab in beliebige Positionen an der Führungseinrichtung festzulegen. Dabei kann die zumindest eine Bremsvorrichtung an einem der Zahnränder oder an einer ein Zahnrand tragenden Lagerachse angreifen.

Gemäß einer bevorzugten Ausführungsform ist vorgesehen, dass der Zugstab an jedem Endbereich mit einem jeweils eine Zahnstange umgreifenden Lagergehäuse versehen ist, dass jedes Lagergehäuse ein drehfest auf einer Lagerachse angeordnetes Zahnrad trägt und dass zumindest eine der Lagerachsen zum Abbremsen der Rückstellbewegung der Aufwickeleinrichtung mit einer Reibungsbremse ausgerüstet ist, die aus einem gegenüber der Lagerachse verdrehfest im Lagergehäuse angeordneten Formkörper aus verschleißfestem, zähelastischen Kunststoffmaterial besteht, welcher eine Bohrung zur Aufnahme eines axialen Bereichs der Lagerachse aufweist, deren Durchmesser kleiner als der Durchmesser der Lagerachse ausgeführt ist, jedoch eine Relativbewegung zwischen Formkörper und Lagerachse zulässt.

Gemäß einer anderen bevorzugten Ausführungsform ist vorgesehen, dass an unverzahnten Umfangsbereichen der Zahnräder jeweils ein durch jeweils eine Druckfeder belasteter Bremsklotz angreift, wobei die Anordnung der Bremsklötze so getroffen ist, dass sie über ein verstellbares Verbindungsorgan gegen die Kraft der Druckfeder unter Aufhebung der Bremswirkung gegeneinander bewegbar sind. Dabei ist es von besonderer Bedeutung, dass das verstellbare Verbindungsorgan aus einem an den Bremsklötzen befestigten, straff geführten Drahtseil besteht, das durch im Abstand voneinander angeordnete Widerlager abgestützt ist, wobei zwischen den Widerlagern ein am Drahtseil angreifendes Stellorgan angeordnet ist, um bei dessen Betätigung die wirksame Länge des Drahtseils zu kürzen und die Bremsklötze gegeneinanderzuziehen.

Mit besonderem Vorteil kann vorgesehen sein, dass das verstellbare Verbindungsorgan aus einem an den Bremsklötzen befestigten, straff geführten Drahtseil besteht, das durch im Abstand voneinander angeordnete Widerlager abgestützt ist, wobei zwischen den Widerlagern ein am Drahtseil angreifendes Stellorgan angeordnet ist, um bei dessen Betätigung die wirksame Länge des Drahtseils zu kürzen und die Bremsklötze gegeneinanderzuziehen. Dabei besteht das Stellorgan bevorzugt aus einem am Zugstab angelenkten und mit einer als Exzenterbahn ausgebildeten Angriffsfläche am Drahtseil abgestützten, von Hand betätigbaren Hebel. Der Zugstab weist dabei einen Griff mit einer Grifföffnung auf, in welcher der als Stellorgan dienende Hebel angeordnet ist.

Gemäß einer weiteren bevorzugten Ausführungsform der Erfindung ist vorgesehen, dass zumindest eines der Zahnräder neben der mit der Zahnstange kämmenden Verzahnung eine Außenverzahnung aufweist, in deren Zahnlücken ein unter dem Einfluss einer Druckfeder stehender Bremskörper einrastbar und mittels eines von Hand betätigbaren Schiebers gegen die Kraft der Druckfeder wieder ausrastbar ist.

Um mögliche Maßunterschiede des Abstands zwischen den Zahnstangen und den Lagergehäusen auszugleichen, ist es von Vorteil, dass zumindest eines der Lagergehäuse durch eine Druckfeder nach außen, d. h. in Richtung zu einer Zahnstange belastet ist.

Ein Ausführungsbeispiel der Erfindung wird nachfolgend anhand der Zeichnungen näher erläutert, und es zeigen:
- Fig. 1: ein komplettes Fensterrollo in Ansicht,
- Fig. 2: einen Teilbereich des Fensterrollos im Vertikalschnitt,
- Fig. 3 - 8: Ausführungsformen und Einzelheiten einer Führungseinrichtung des Fensterrollos und Fig. 1 und 2,
- Fig. 9: ein zweites komplettes Fensterrollo in Ansicht,
- Fig. 10: einen Teilbereich des Fensterrollos nach Fig. 9 im Vertikalschnitt,
- Fig. 11: einen Teilbereich des Fensterrollos nach Fig. 9 im Horizontalschnitt,
- Fig. 12: ein drittes komplettes Fensterrollo in Ansicht,
- Fig. 13: einen Teilbereich des Fensterrollos nach Fig. 12 im Vertikalschnitt
- Fig. 14: ein viertes komplettes Fensterrollo in Ansicht und
- Fig. 15: einen Teilbereich des Fensterrollos nach Fig. 14 im Vertikalschnitt.

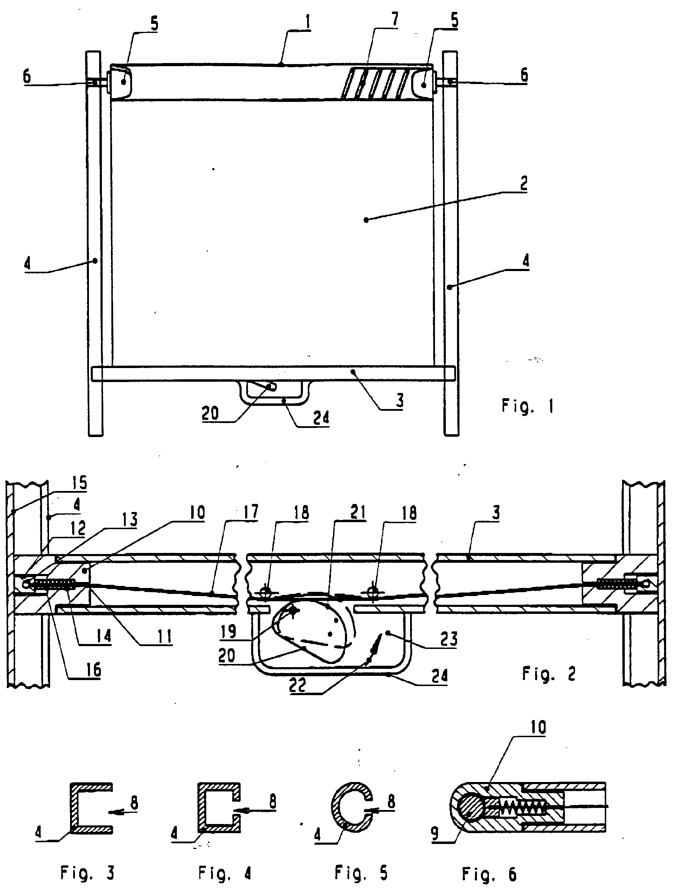

Das neue Fensterrollo gemäß der Fig. 1 bis 8 besteht im wesentlichen aus einer Wickelwelle 1, einer darauf auf- und abwickelbar angeordneten Rollobahn 2, einem Zugstab 3, an dem das freie Ende der Rollobahn 2 befestigt ist und aus einer aus zwei die Rollobahn 2 an den Längsrändern flankierenden Hohlprofilleisten 4 gebildeten Führungseinrichtung.

Die Wickelwelle 1 besteht zweckmäßigerweise aus einem Rohr mit endseitigen Verschlusselementen 5, Drehzapfen 6 und einer in ihrem Innern angeordneten, lediglich strichpunktiert angedeuteten Aufwickelvorrichtung mit Feder 7.

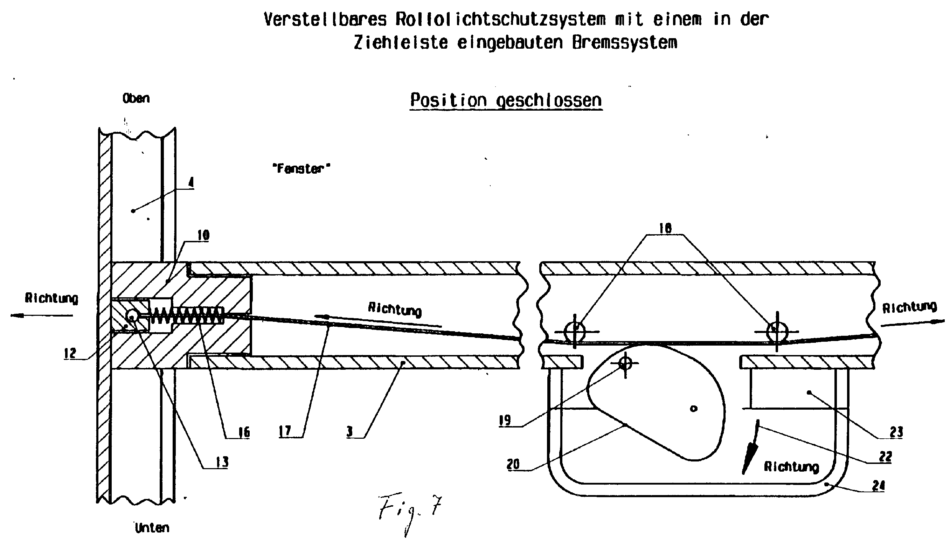

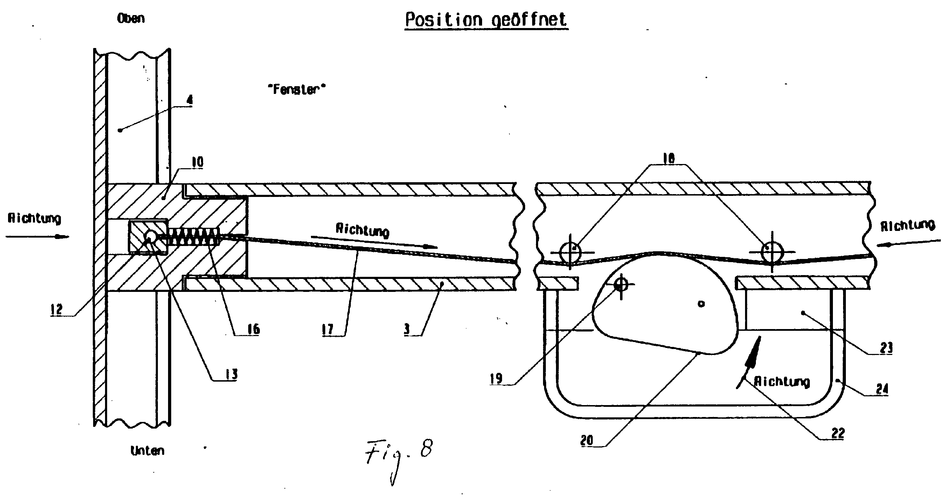

Die Hohlprofilleisten 4 weisen auf ihren einanderzugewandten Seiten jeweils einen Längsschlitz 8 auf, der wie in Fig. 3 bis 5 gezeigt recht unterschiedlich ausgeführt werden kann. So können die Hohlprofilleisten 4 als U-Profil gemäß Fig. 3, als geschlitztes Kastenprofil gemäß Fig. 4 oder auch als geschlitztes Rohrprofil gemäß Fig. 5 gestaltet sein. Eine andere Variante zeigt Fig. 6, wobei ein massives Rundprofil 9 zur Bildung der Führungseinrichtung vorgesehen ist.

Fig. 2 zeigt einen Schnitt durch eine der Hohlprofilleisten 4 und durch den Zugstab 3, der ebenfalls aus einem Hohlprofil besteht und bevorzugt die Form einer Zierprofilleiste aufweist. Die in Fig. 2 nicht gezeigte rechte Hälfte ist spiegelbildlich zur gezeigten linken Hälfte ausgebildet. In jedes Ende des Zugstabs 3 ist ein Verschlusskörper 10 eingesetzt, der eine Stufenbohrung und eine Durchlassöffnung 11 aufweist. Die erste Stufe 12 der Stufenbohrung ist zur Aufnahme eines Bremsklotzes 13 und die zweite Stufe 14 zur Aufnahme einer den Bremsklotz 13 gegen die Innenwandung 15 der Hohlprofilleiste 4 belastenden Druckfeder 16 vorgesehen. Durch die unter der Belastung der Druckfeder 16 stehenden Bremsklötze 13 wird der Zugstab 3 und mit diesem die Rollobahn 2 in jeder beliebigen Position an den Hohlprofilleisten 4 der Führungseinrichtung gehalten. Die Anordnung ist, wie aus Fig. 2 ersichtlich so getroffen, dass die Bremsklötze 13 über ein verstellbares Verbindungsorgan gegen die Kraft der Druckfedern 16 unter Aufhebung der Bremswirkung gegeneinander bewegbar sind. Als verstellbares Verbindungsorgan fungiert ein durch die Durchgangsöffnungen 11 in den Verschlusskörpern 10 geführtes, bevorzugterweise schlauchummanteltes Drahtseil 17, das an den Bremsklötzen 13 befestigt ist und straff durch den Zugstab 3 verläuft. Im etwa mittigen Bereich ist das Drahtseil 17 durch zwei im Abstand zueinander angeordnete Widerlager 18, die aus Stiften bestehen können, abgestützt. Zwischen den Widerlagern 18 ist ein am Drahtseil 17 angreifendes Stellorgan angeordnet, welches aus einem am Zugstab 3 bei der Position 19 angelenkten Hebel 20 besteht. Die Angriffsfläche des Hebels 20 am Drahtseil 17 ist als Exzenterbahn 21 ausgebildet, so dass das Drahtseil 17 in den Raum zwischen den Widerlagern 18 beim Verschwenken des Hebels 20 in Pfeilrichtung 22 hineinbewegt wird. Hierdurch kommt es dann zwangsweise zur Kürzung der gestreckten Drahtseillänge und zur Gegeneinanderbewegung der Bremsklötze 13, die dabei von der Innenwandung 15 der Hohlprofilleisten 4 und vorübergehender Aufhebung ihrer Bremswirkung abgezogen werden. Zweckmäßigerweise ist der Hebel 20 in der Grifföffnung 23 eines Griffs 24 angeordnet. Der Griff 24 kann von einer menschlichen Hand umfasst werden, wobei sich der Hebel 20 z. B. mit dem Daumen der menschlichen Hand betätigen bzw. verschwenken lässt. Zum Auf- oder Abwickeln der Rollobahn 2 in beliebiger Position ist somit lediglich der Griff 24 zu erfassen und die Bremswirkung der Bremsklötze 13 durch eine Betätigung des Hebels 20 aufzuheben. Nach dem Loslassen des Hebels 20 schwenkt dieser durch die Drahtseilspannung automatisch in seine Ausgangslage zurück. In Fig. 2 ist mit ausgezogenen Linien die Ausgangslage des Hebels 20 und des Drahtseils 17 gezeigt und mit strichpunktierten Linien die Hebelbetätigungsposition dargestellt.

Das Beispiel nach Fig. 6 zeigt, dass die Verschlusskörper 10 auch zum Umgreifen von Massivprofilen, wie Rundstangen ausgebildet sein können ohne das Erfindungsprinzip verlassen.

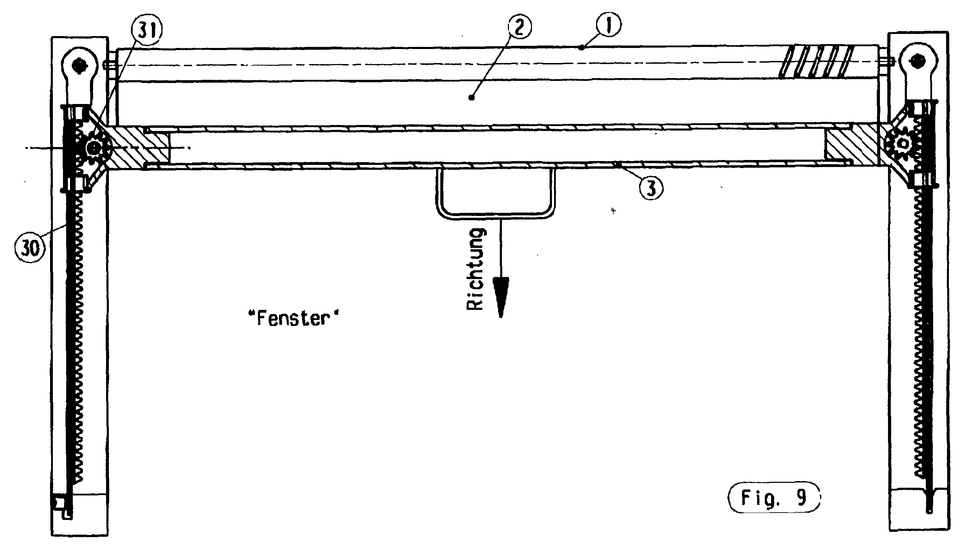

Zur besseren Verdeutlichung der Erfindung sind noch Fig. 7 und 8 in einem gegenüber den Fig. 1 bis 6 vergrößerten Maßstab beigefügt. Dabei zeigt Fig. 7 das neue Fensterrollo mit einem Bremssystem im geschlossenen Zustand und Fig. 8 zeigt das neue Fensterrollo mit einem Bremssystem im geöffneten Zustand.

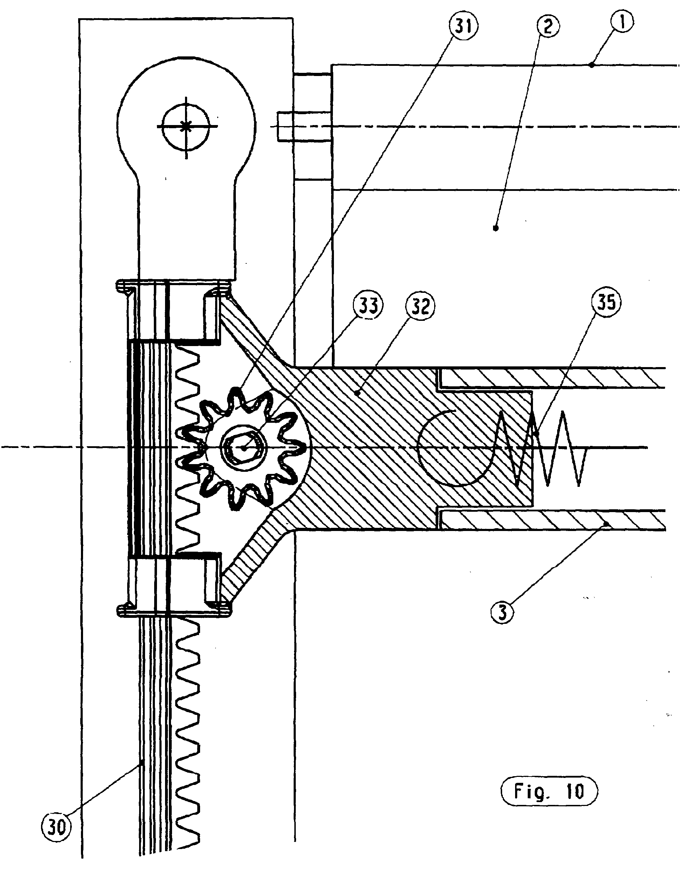

Bei den in den Fig. 9 bis 15 gezeigten Fensterrollos sind die mit den Fensterrollos gemäß den Fig. 1 bis 8 übereinstimmenden Teile mit den gleichen Bezugszeichen versehen.

So besteht das neue Fensterrollo gemäß Fig. 9 bis 11 im wesentlichen aus einer Wickelwelle 1, einer darauf auf- und abwickelbar angeordneten Rollobahn 2, einem Zugstab 3, an dem das freie Ende der Rollobahn 2 befestigt ist und aus einer Führungseinrichtung, die zwei die Rollobahn 2 an ihren Längsrändern flankierende Zahnstangen 30 und zwei damit kämmende Zahnräder 31, die an den Endbereichen des Zugstabs 3 angeordnet sind, umfasst.

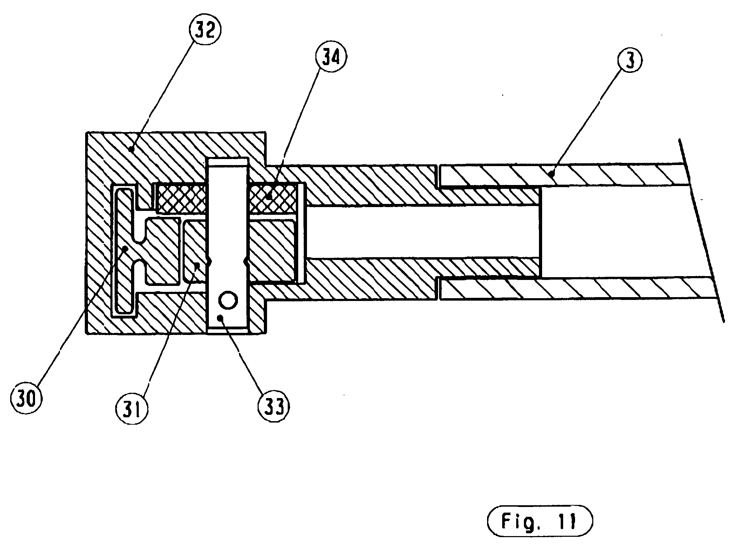

Fig. 10 zeigt einen Schnitt durch einen der Endbereiche des Zugstabs 3 und lässt ein in dieses Zugstabende eingesetztes Lagergehäuse 32 erkennen, welches zur Lagerung einer Lagerachse 33, eines Zahnrads 31 und eines Formkörpers 34 dient. Wie ersichtlich, vermag das Zahnrad 31 mit der Verzahnung der Zahnstange zu kämmen, wie auch das am anderen Zugstabende befindliche zweite Zahnrad 31 und der zugehörigen Verzahnung der zweiten Zahnstange 30, so dass der Zugstab 3 beim Abziehen der Rollobahn 2 von der Wickelwelle nicht verkanten kann. Maßunterschiede können durch eine auf ein Lagergehäuse 32 einwirkende Feder 35 ausgeblichen werden.

Wie aus Fig. 11 ersichtlich, trägt die Lagerachse 33 nicht nur ein verdrehfest mit ihr verbundenes Zahnrad 31, sondern zudem den erwähnten Formkörper 34, welcher als Reibungsbremse dient und aus einem verschließfesten, zähelastischen Kunststoffmaterial, wie aus einem thermoplastischen Polyesterelastomer besteht. Der Formkörper 34 weist eine Bohrung zur Aufnahme eines axialen Bereichs der Lagerachse 33 auf und der Öffnungsquerschnitt der Bohrung ist kleiner als der Querschnitt der Lagerachse 33, so dass die Lagerachse 33 nach Art einer Presspassung in der Bohrung sitzt. Die Presspassung ist allerdings so gewählt, dass noch eine Relationsbewegung zwischen dem Formkörper 34 und der Lagerachse 33 möglich ist und eine Arretierung des Rollos durch eine Angleichung der Federkraft der Aufwickelvorrichtung und den Formkörpern 34 bewirkt wird.

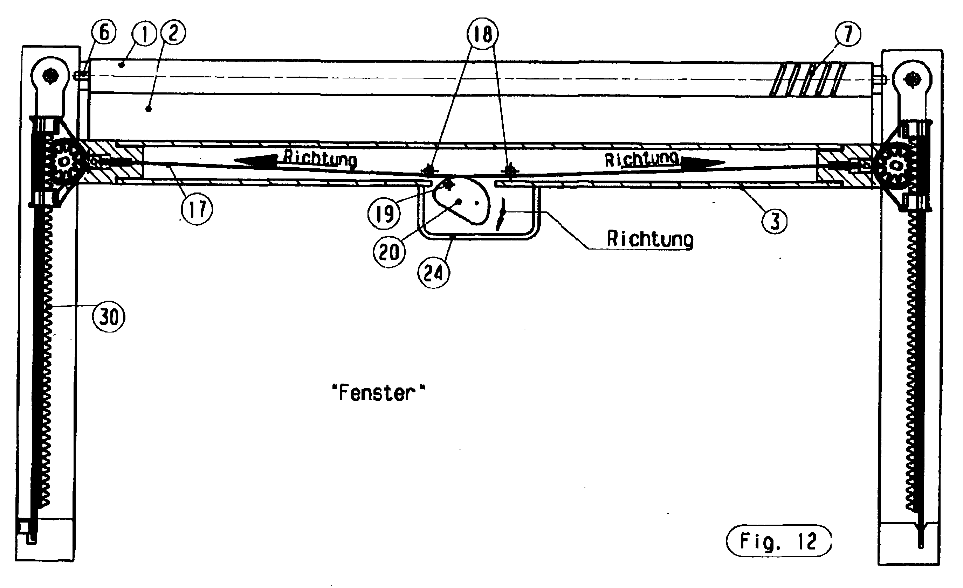

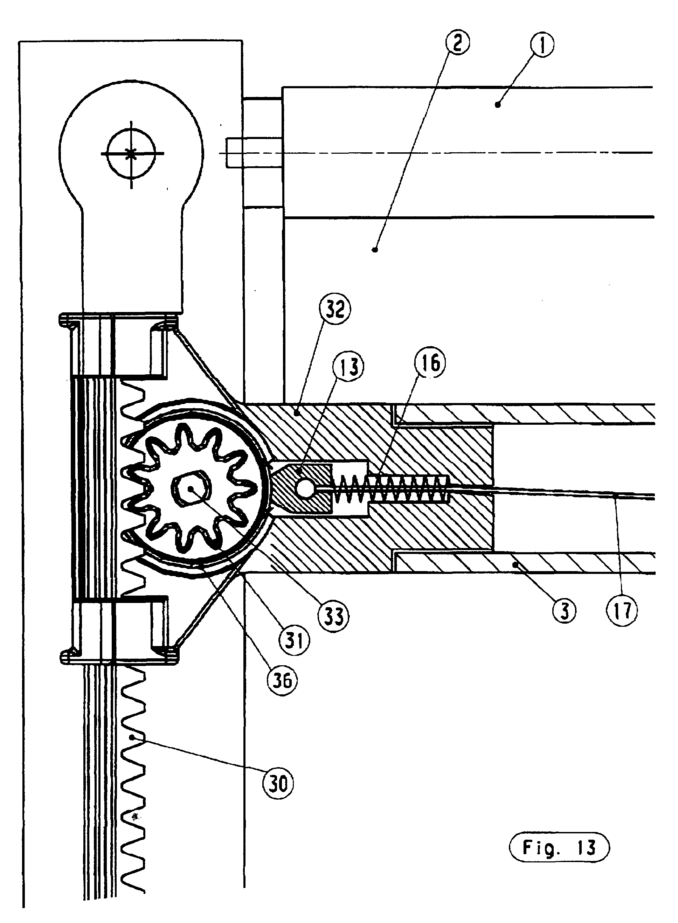

Das neue Fensterrollo nach Fig. 12 und 13 hat einen ähnlichen Aufbau wie das nach den Fig. 1 bis 8, so dass auch hier wieder für übereinstimmende Teile die gleichen Bezugszeichen dienen sollen. Anstelle der beim Fensterrollo nach Fig. 1 bis 8 vorgesehenen Hohlprofilleisten 4 und Verschlusselement 5 sind beim Fensterrollo nach Fig. 12 und 13 Führungseinrichtungen vorgesehen, welche entsprechend dem Fensterrollo nach Fig. 9 bis 11 zwei die Rollobahn 2 an ihren Längsrändern flankierende Zahnstangen 30 und zwei damit kämmende Zahnräder 31, die an den Endbereichen des Zugstabs 3 abgeordnet sind, umfassen.

In die Zugstabenden sind Lagergehäuse 32 eingesetzt, die jeweils zur Lagerung einer Lagerachse 33 und eines Zahnrads 31 dienen und die jeweils, wie in Fig. 11 gezeigt, eine Zahnstange 30 umgreifen. Die Zahnräder 31 weisen jeweils einen verzahnten Umfangsbereich auf, der mit den Zahnstangen 30 zusammenwirkt und daneben auch einen unverzahnten Umfangsbereich 36 auf, der mit Bremsklötzen 13 zusammenwirkt. Die Ausbildung der Bremseinrichtung, die Wirkungsweise der Bremse sowie die Aufhebung der Bremswirkung zum Verstellen der Rollobahn 2 entspricht exakt der Ausführungsform nach Fig. 2, auf deren ausführliche Beschreibung hier Bezug genommen wird um unnötige Wiederholungen zu vermeiden.

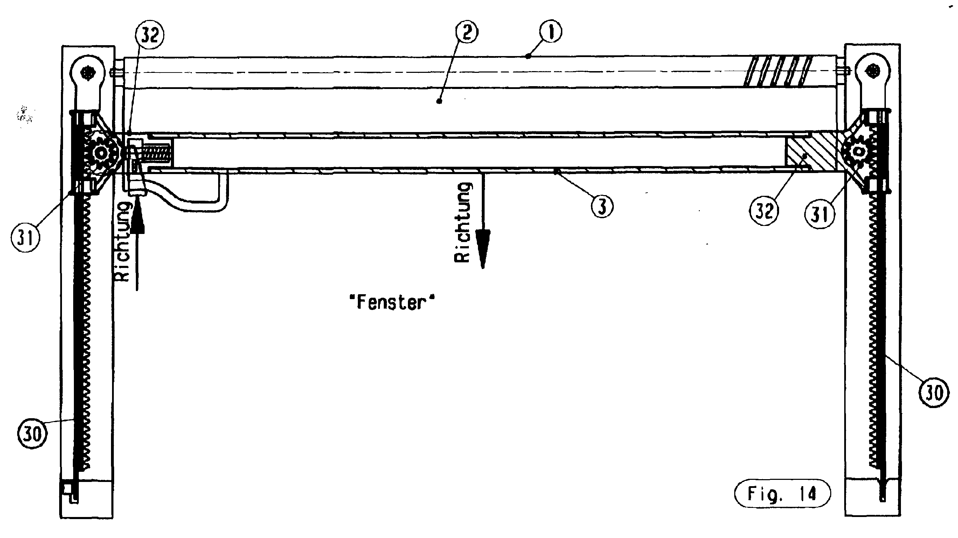

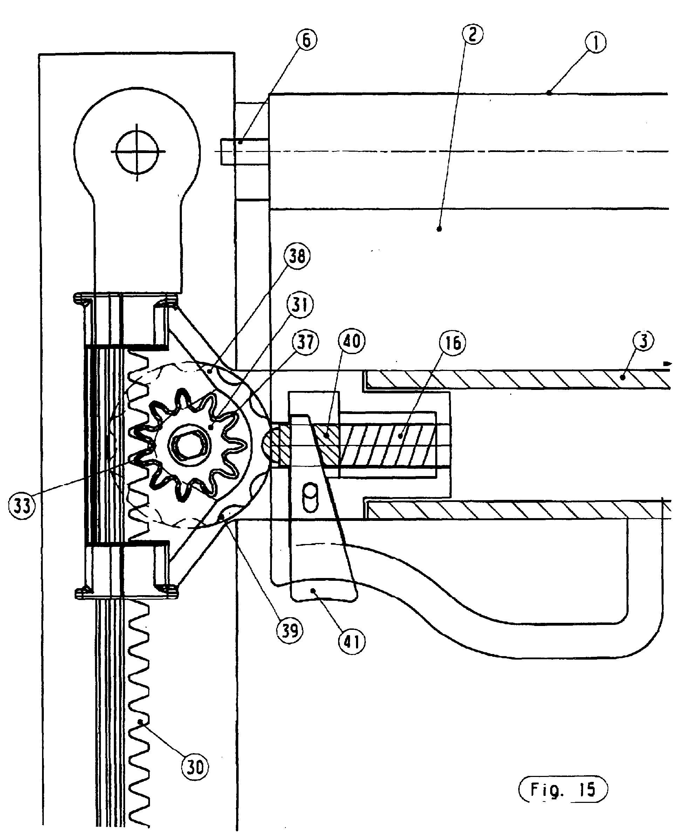

Auch bei dem neuen Fensterrollo nach Fig. 14 und 15 wurden die mit den beschriebenen Ausführungen übereinstimmenden Teile mit übereinstimmenden Bezugszeichen versehen. Bei der Ausführungsform nach Fig. 14 und 15 ist zumindest eines der Zahnräder 31 neben der mit der Zahnstange 30 kämmenden Verzahnung 37, mit einer Außenverzahnung 38 versehen. In die Zahnstücke 39 des Zahnrads 31 greift ein unter dem Einfluss einer Druckfeder 16 stehender Bremskörper 40 ein, der aber mittels eines von Hand betätigbaren Schiebers 41 gegen die Kraft der Druckfeder 16 wieder ausrastbar ist.

Die Erfindung ist nicht auf die dargestellten Ausführungsbeispiele beschränkt, sondern umfasst auch alle im Sinne der Erfindung gleichwirkenden Ausführungen. Ferner ist die Erfindung nicht auf die im Anspruch 1 oder Anspruch 6 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich jedes Einzelmerkmal des Anspruchs 1 oder des Anspruchs 6 weggelassen bzw. durch mindestens ein an anderer Stelle der Anmeldungsunterlagen offenbartes Einzelmerkmal ersetzt werden kann. Die vorliegenden Ansprüch 1 und 6 sind somit als ein erster Formulierungsversuch für die Kennzeichnung der Erfindung zu verstehen.

## Patentansprüche

1. Fensterrollo mit
- einer eine Aufwickeleinrichtung aufweisenden Wickelwelle (1),
- einer auf der Wickelwelle (1) aufgewickelten Rollobahn (2),
- einem Zugstab (3), an dem das freie Ende der Rollobahn (2) befestigt ist,
- einer Führungseinrichtung, an der die Endbereiche des Zugstabs (3) senkrecht zur Zugstabsachse längsverschiebbar angeordnet sind und
- einer innerhalb des Zugstabs (3) angeordneten Bremseinrichtung, die lösbar an der Führungseinrichtung angreift, um den Zugstab (3) in beliebigen Positionen an der Führungseinrichtung festzulegen.

2. Fensterrollo nach Anspruch 1, **dadurch gekennzeichnet, dass** die Führungseinrichtung aus zwei die Rollobahn (2) an ihren Längsrändern flankierende Hohlprofilleisten (4) besteht, die an ihren einander zugewandten Seiten jeweils mit einem Längsschlitz (8) versehen sind und dass in die freien Enden des Zugstabs (3) Verschlusskörper (10) eingesetzt sind, die jeweils in einen der Längsschlitze (8) eingreifen und jeweils eine Öffnung (12) mit einem darin eingesetzten, durch eine Druckfeder (16) belasteten Bremsklotz (13) aufweisen, wobei die Anordnung der Bremsklötze (13) so getroffen ist, dass sie über ein verstellbares Verbindungsorgan gegen die Kraft der Druckfedern (16) unter Aufhebung der Bremswirkung gegeneinander bewegbar sind.

3. Fensterrollo nach Anspruch 1 oder 2, **dadurch gekennzeichnet, dass** das verstellbare Verbindungsorgan aus einem an den Bremsklötzen (13) befestigten, straff geführten Drahtseil (17) besteht, das durch im Abstand voneinander angeordnete Widerlager (18) abgestützt ist, wobei zwischen den Widerlagern (18) ein am Drahtseil (17) angreifendes Stellorgan angeordnet ist, um bei dessen Betätigung die wirksame Länge des Drahtseils (17) zu kürzen und die Bremsklötze (13) gegeneinanderzuziehen.

4. Fensterrollo nach Anspruch 3, **dadurch gekennzeichnet, dass** das Stellorgan aus einem am Zugstab (3) angelenkten und mit einer als Exzenterbahn (21) ausgebildeten Angriffsfläche am Drahtseil (17) abgestützten Hebel (20) besteht, der von Hand betätigbar ist.

5. Fensterrollo nach zumindest einem der Ansprüche 1 bis 5, **dadurch gekennzeichnet, dass** der Zugstab (3) einen Griff (24) mit einer Grifföffnung (23) aufweist, in welcher der als Stellorgan dienende Hebel (20) angeordnet ist.

6. Fensterrollo mit
- einer eine Aufwickeleinrichtung aufweisenden Wickelwelle (1),
- einer auf der Wickelwelle (1) aufgewickelten Rollobahn (2),
- einem Zugstab (3), an dem das freie Ende der Rollobahn (2) befestigt ist,
- einer Führungseinrichtung, an der die Endbereiche des Zugstabs (3) senkrecht zur Zugstabsachse längsverschiebbar angeordnet sind, wobei die Führungseinrichtung zwei die Rollobahn (2) an ihren Längsrändern flankierende Zahnstangen (30) und zwei damit kämmende Zahnräder (31), die an den Endbereichen des Zugstabs (3) angeordnet sind, umfasst und
- zumindest einer Bremseinrichtung, um den Zugstab (3) in beliebigen Positionen an der Führungseinrichtung festzulegen.

7. Fensterrollo nach Anspruch 6, **dadurch gekennzeichnet, dass** die zumindest eine Bremseinrichtung an einem der Zahnräder (31) oder an einer ein Zahnrad (31) tragenden Lagerachse (33) angreift.

8. Fensterrollo nach Anspruch 6 oder 7, **dadurch gekennzeichnet, dass** der Zugstab (3) an jedem Endbereich mit einem jeweils eine Zahnstange (30) umgreifenden Lagergehäuse (32) versehen ist, dass jedes Lagergehäuse (32) ein drehfest auf einer Lagerachse (33) angeordnetes Zahnrad (31) trägt und dass zumindest eine der Lagerachsen (33) zum Abbremsen der Rückstellbewegung der Aufwickeleinrichtung mit einer Reibungsbremse ausgerüstet ist, die aus einem gegenüber der Lagerachse (33) verdrehfest im Lagergehäuse (32) angeordneten Formkörper (34) aus verschleißfestem, zähelastischen Kunststoffmaterial besteht, welcher eine Bohrung zur Aufnahme eines axialen Bereichs der Lagerachse (33) aufweist, deren Durchmesser kleiner als der Durchmesser der Lagerachse (33) ausgeführt ist, jedoch eine Relativbewegung zwischen Formkörper (34) und Lagerachse (33) zulässt.

9. Fensterrollo nach Anspruch 6 oder 7, **dadurch gekennzeichnet, dass** an unverzahnten Umfangsbereichen (36) der Zahnräder (31) jeweils ein durch jeweils eine Druckfeder (16) belasteter Bremsklotz (13) angreift, wobei die Anordnung der Bremsklötze (13) so getroffen ist, dass sie über ein verstellbares Verbindungsorgan gegen die Kraft der Druckfeder (16) unter Aufhebung der Bremswirkung gegeneinanderbewegbar sind.

10. Fensterrollo nach Anspruch 9, **dadurch gekennzeichnet, dass** das verstellbare Verbindungsorgan aus einem an den Bremsklötzen (13) befestigten, straff geführten Drahtseil (17) besteht, das durch im Abstand voneinander angeordnete Widerlager (18) abgestützt ist, wobei zwischen den Widerlagern (18) ein am Drahtseil (17) angreifendes Stellorgan angeordnet ist, um bei dessen Betätigung die wirksame Länge des Drahtseils (17) zu kürzen und die Bremsklötze (13) gegeneinanderzuziehen.

11. Fensterrollo nach Anspruch 10, **dadurch gekennzeichnet, dass** das Stellorgan aus einem am Zugstab (3) angelenkten und mit einer als Exzenterbahn (21) ausgebildeten Angriffsfläche am Drahtseil (17) abgestützten Hebel (20) besteht, der von Hand betätigbar ist.

12. Fensterrollo nach zumindest einem der Ansprüche 6 bis 11, **dadurch gekennzeichnet, dass** der Zugstab (3) einen Griff (24) mit einer Grifföffnung (23) aufweist, in welcher der als Stellorgan dienende Hebel (20) angeordnet ist.

13. Fensterrollo nach Anspruch 6 oder 7, **dadurch gekennzeichnet, dass** zumindest eines der Zahnräder (31) neben der mit der Zahnstange (30) kämmenden Verzahnung (37) eine Außenverzahnung (38) aufweist, in deren Zahnlücken (39) ein unter den Einfluss einer Druckfeder (16) stehender Bremskörper (40) einrastbar und mittels eines von Hand betätigbaren Schiebers (41) gegen die Kraft der Druckfeder (16) wieder ausrastbar ist.

14. Fensterrollo nach wenigstens einem der Ansprüche 6 bis 13, **dadurch gekennzeichnet, dass** zumindest eines der Lagergehäuse (32) durch eine Druckfeder (35) nach außen, d. h. in Richtung zu einer Zahnstange (30) belastet ist.
